# EUROPEAN PATENT APPLICATION

(11) **EP 0 566 283 A2**
(43) Date of publication of application: **20.10.1993**
(21) Application number: 93302574.4
(22) Date of filing: 01.04.1993
(51) Int. Cl.: G05B 19/04, G06F 15/46, G05B 19/00

(54) **Interface for providing multiple computer systems access to a process control system**

(30) Priority: 14.04.1992 US 868382
(71) Applicant: HONEYWELL INC., Minneapolis Minnesota 55408 (US)
(72) Inventor: Kish, Karl S., Glendale, Arizona 85310 (US); Heim, Thomas W., Tempe, Arizona 84282 (US)
(74) Representative: Fox-Male, Nicholas Vincent Humbert

(57) **Abstract**

Interface apparatus which provides communications between a process control system and a computer system comprises a first processor compatible with modules of the process control system, a second processor compatible with modules of the computer system, and a memory unit divided into two portions, memory A and memory B. The process control system modules are connected to a first network and communicate with each other via a first protocol and the computers are connected to a second network and communicate with each other via a second protocol. A computer communicates to the process control system via the interface, the second processor of the interface accepting the message and storing it in memory B portion. The first processor obtains messages from memory B, communicates with the appropriate module, and stores the obtained reply in memory A portion. The second processor looks for the reply in memory portion and fetches the reply and transmits it to the requesting computer.

## Description

### RELATED APPLICATION

The present patent application as related to U.S. Patent Application, Serial No. 07/868,383, entitled "A METHOD FOR ACCESSING MEMORY RESIDENT REAL-TIME DATE," by K. Kish and T. Heim, filed on 14 April 1992, and assigned to Honeywell Inc., the assignee of the present invention.

### BACKGROUND OF THE INVENTION

This invention relates to an interface apparatus, and more particularly, to an interface apparatus for providing access to a process control system by multiple computer systems.

Previously, interfaces were designed to permit a single computer to connect to a single process control system. In some cases, interfaces were provided which permitted a single computer to connect to an individual vendor proprietary process network.

The present invention provides an interface which permits multiple computer systems to exchange information with distributed process control systems in a timely fashion. In addition, the interface of the present invention permits access to the process control system while maintaining security on the computer systems and the process control systems. Also, a single interface apparatus can be shared by among an unlimited number of computers.

### SUMMARY OF THE INVENTION

Therefore, there is provided by the present invention an interface apparatus for providing access to a process control system by multiple computer systems. The interface apparatus provides communications between a process control system and a computer system. The process control system includes a plurality of modules, each module operatively connected to a first network, and each module communicates with the other modules in accordance with a first predetermined protocol. The computer system includes a plurality of computers, each computer operatively connected to a second network, and each computer communicates with the other computers in accordance with a second predetermined protocol. The interface apparatus comprises a first processor, operatively connected to the first network, the first processor being of a type compatible with processors utilized in the modules of the process control system. The first process interfaces to the first network just like any other module of the process control system, such that, the first processor communicates with the plurality of modules connected to the first network in accordance with the first predetermined protocol in response to request and reply commands received from the process control system and the computer system. Asecond processor, operatively connected to the second network, is of a type compatible with processors utilized in the computers of the computer system. The second processor interfaces to the second network just like any other computer of the computer system, such that, the second processor communicates with the plurality of computers connected to the second network in accordance with the second predetermined protocol in response to request and reply commands received from the process control system and the computer system. A memory unit, being accessible by both the first and second processor, is divided in two portions, memory A and memory B. The first processor stores information, to be transferred from the process control system to the computer system, in the memory A portion. The first processor also fetches information, to be passed on to the process control system from the computer system, from the memory B portion. The second processor stores information, to be transferred from the computer system to the process control system, in the memory B portion. The second processor also fetches information, to be passed on to the computer system from the process control system, from the memory A portion, thereby effecting communications between the process control system and the computer system.

Accordingly, it is an object of the present invention to provide an interface apparatus for accessing a process control system by multiple computer systems.

It is another object of the present invention to provide an interface apparatus for accessing a process control system by multiple computer systems while maintaining security on both the computer systems and the process control system.

It is still another object of the present invention to provide an interface apparatus for accessing a process control system by multiple computer systems, wherein an unlimited number of computers within a computer system share the interface apparatus.

These and other objects of the present invention will become more apparent when taken in conjunction with the following description and attached drawings, wherein like characters indicate like parts, and which drawings form a part of the present application.

### BRIEF DESCRIPTION OF THE DRAWINGS

Figure 1 shows a block diagram of the preferred embodiment of a process control system in which the interface apparatus of the present invention is utilized;
Figure 2 shows a system block diagram of the process control system interconnected to a computer system by an interface apparatus of the present invention;
Figure 3 shows a block diagram of the interface apparatus of the preferred embodiment of the present invention; and
Figure 4, which comprises Figures 4A-4C, shows a flow diagram of the communication sequence of the interface apparatus of the preferred embodiment of the present invention, wherein Figure 4A shows a flow diagram of the VAX portion of the interface apparatus, Figure 4B shows a flow diagram of the process control (LCN) portion of the interface apparatus, and Figure 4C shows a data caching function of the VAX portion of the interface apparatus.

### DETAILED DESCRIPTION

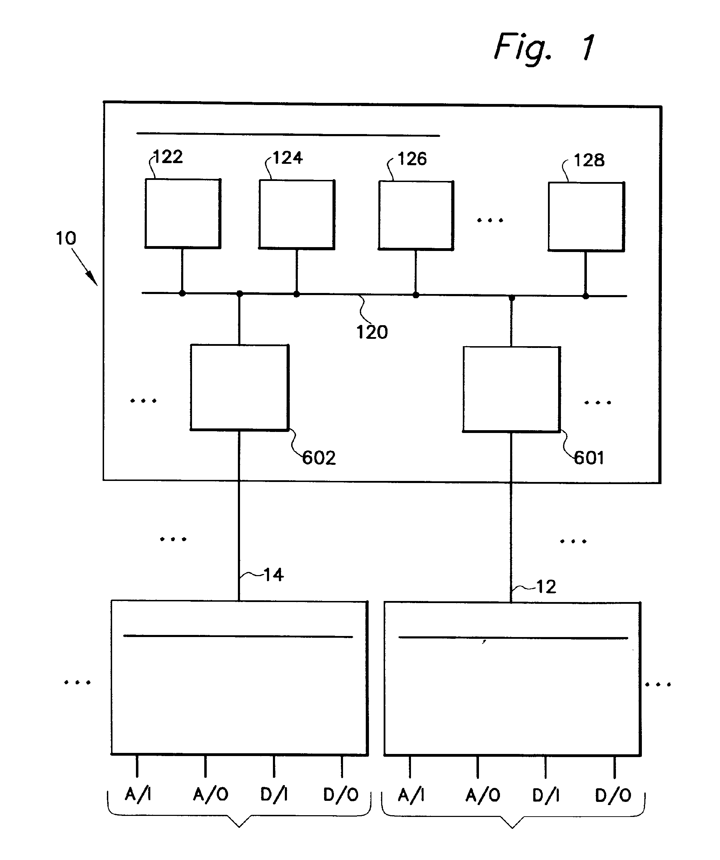

Before describing the interface apparatus of the present invention, it will be helpful in understanding a process control system, and in particular, the process control system of the preferred embodiment in which the interface apparatus can be utilized. Referring to Figure 1, there is shown a block diagram of a process control system 10. The process control system 10 includes a plant control network 11, and connected thereto is a data highway 12, which permits a process controller 20' to be connected thereto. In the present day process control system 10, additional process controller 20' can be operatively connected to the plant control network 11 via a corresponding highway gateway 601 and a corresponding data highway 12. A process controller 20, is operatively connected to the plant control network 11 via a universal control network (UCN) 14 to a network interface module (NIM) 602. In the preferred embodiment of the process control system 10, additional process controllers 20 can be operatively connected to the plant control network 11 via a corresponding UCN 14 and a corresponding NIM 602. The process controllers 20,20' interface the analog input and output signals, and digital input and output signals (A/I, A/O, D/I, and D/O, respectively) to the process control system 10 from the variety of field devices (not shown) which include valves, pressure switches, pressure gauges, thermocouples,....

The plant control network 11 provides the overall supervision of the controlled process, in conjunction with the plant operator, and obtains all the information needed to perform the supervisory function, and includes an interface with the operator. The plantcon- trol network 11 includes a plurality of physical modules, which include a universal operator station (US) 122, an application module (AM) 124, a history module (HM) 126, a computer module (CM) 128, and duplicates of these modules (and additional types of modules, not shown) as necessary to perform the required control/supervisoryfunction of the process being controlled. Each of these physical modules includes a microprocessor and is operatively connected to a local control network (LCN) 120 which permits each of these modules to communicate with each other as necessary in accordance with a predetermined protocol. The NIM 602 and HG 601 provide an interface between the LCN 120 and the UCN 14, and the LCN 120 and the data highway 12, respectively. A more complete description of the plant control network 11, and the physical modules can be had by reference to U.S. Patent No. 4,607,256, and a more complete description of the process controller 20' can be had by reference to U.S. Patent No. 4,296,464. The process controller 20, provides similar functions to that of process controller 20' but contains many improvements and enhancements.

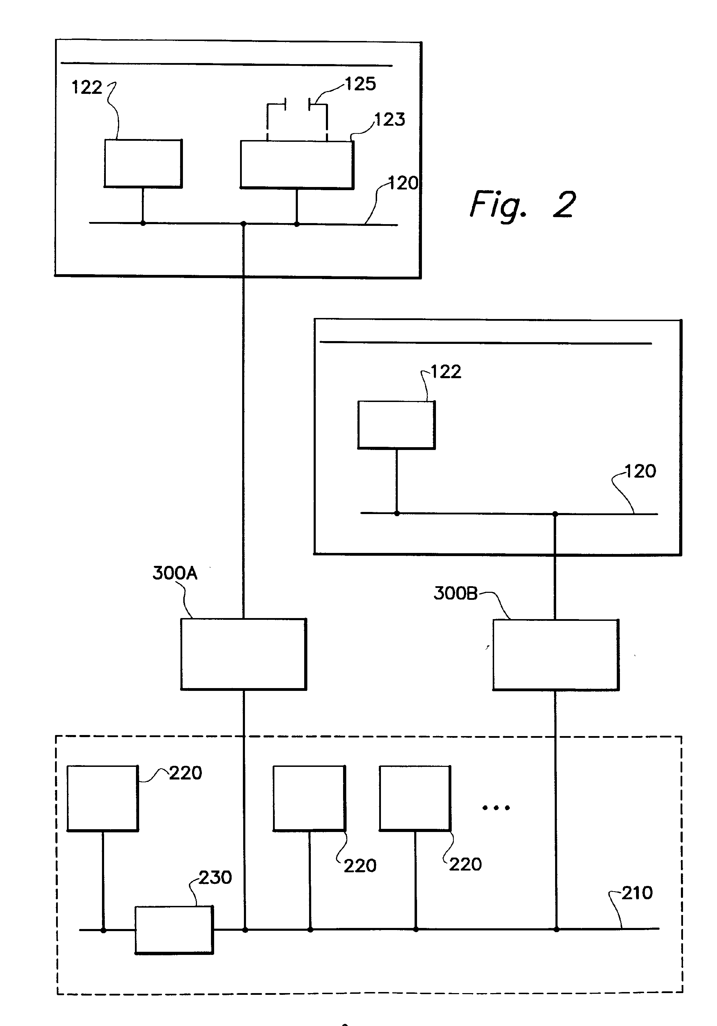

Referring to Figure 2, there is shown a system block diagram of the process control system 10 and a computer system 200 interconnected by an interface apparatus 300 of the present invention. A computer system of the preferred embodiment includes a plurality of VAX computers connected to a network (NETWORK) 210. VAX 2, VAX 3, ...220 are each operatively connected to the NETWORK 210. VAX 1 220 (which may be remotely located from the other VAX machines or computers) is also operatively connected to the NETWORK 210 via a link 230. Each VAX 220 communicates to the other VAXes on the NETWORK 210 by a predetermined protocol. (VAX is a family or class of computers of the Digital Equipment Corporation, Maynard, Massachusetts, and additional information regarding VAX computers and the NETWORK, DECnet, can be obtained by manuals provided by the Digital Equipment Corporation.) It will be recognized by those skilled in the art that although a VAX computer system is utilized in the description and in the preferred embodiment, any computer system can be utilized, as described herein, and any process control system can likewise be used.

The computer system 200 can obtain data from the various modules of the process control system 10 via an interface 300, the apparatus of the present invention. The interface A 300A is operatively connected to the LCN 120 of the process control system A 1 OA and the NETWORK 210 of the computer system 200. Likewise, the interface B 300B is operatively connected to the LCN 120 of the process control system B 1 OB and to the NETWORK 210 of the computer system 200. The interface 300 is communicated to by the VAXes 220 of the computer system 200 in accordance with the predetermined NETWORK protocol as though the interface 300 is another VAX. Similarly, the interface 300 communicates to the modules connected to the LCN 120 of the process control system 10 like any other module connected to the LCN in accordance with the predetermined LCN protocol. Thus, if the current status or configuration of a valve 125 in the process control system A 10A is desired by VAX 2 220, VAX 2 220 communicates to interface A 300A utilizing the address of interface Aand requesting the desired information in accordance with the predetermined NETWORK protocol. Interface A300A communicates with module X 123 (module X having the configuration/status of valve 125) like any other module connected to LCN 120 in accordance with the predetermined LCN protocol. Module X responds to interface A 300A like it responds to any other module connected to the LCN 120, supplying the requested data. The data exchange is made within interface A 300A and communicated to the requesting VAX i.e., VAX 2 220, in accordance with the predetermined NETWORK protocol, thereby providing the access to the process control system by the computer system. Interface B 300B is utilized to connect the computer system 200 to the process control system B 10B. All of the VAX computers 220 connected to the NETWORK 210 of the computer system 200 have access to the process control system through the single interface apparatus 300. Although not shown, it will be understood by those skilled in the art that additional computer systems can be interconnected via a corresponding interface apparatus 300 to the process control systems 10A, 10B.

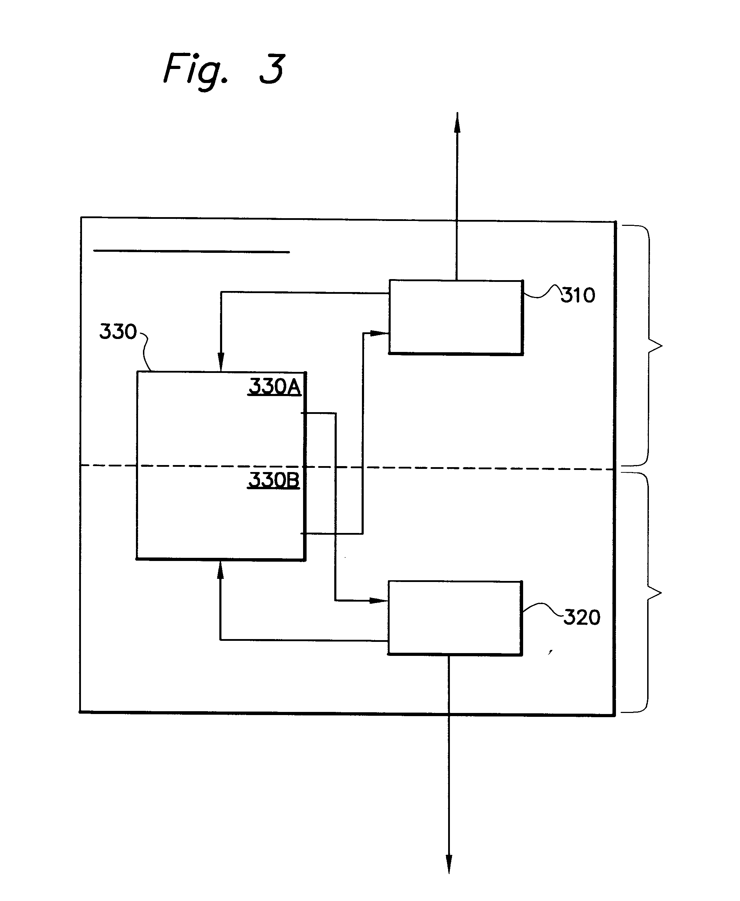

Referring to Figure 3, there is shown a block diagram of the interface apparatus of the preferred embodiment of the present invention. The interface apparatus 300 essentially consists of 2 portions, i.e., a VAX portion and an LCN portion. The LCN portion includes a microprocessor 310 (up) which is operatively connected to the LCN 120 of the process control system 10. In the preferred embodiment of the present invention, the microprocessor 310 is a Motorola 68000 micro processor. (Itwill be recognized by those skilled in the art that any microprocessor can be utilized. It simplifies the implementation to utilize a up that is of the same type or compatible with the up of the modules; thus, the Motorola up is used in the preferred embodiment since it is the up of the modules.) The microprocessor 310 interfaces to the LCN 120 in accordance with the predetermined LCN protocol. The VAX portion includes a VAX processor 320 which is operatively connected to the VAX NETWORK 210. The VAX communicates to the VAX NETWORK 210 in accordance with the predetermined VAX protocol. In the preferred embodiment the VAX processor is an RT300 DEC processor (a Digital Equipment Corp. processor which is a VAX processor, for the reasons stated above). The interface 300 includes a memory 330 which is operatively connected to both the microprocessor 310 and the VAX processor 320 in a predefined manner. Specifically, the memory 330 consists of two portions, memory A 330A and memory B 330B. Memory A 330A is written into by microprocessor 310 and is read by VAX processor 320. Conversely, memory B 330B can be written into by the VAX processor 320 and is read by the microprocessor 310. In this manner, messages received by the VAX processor 320 from the VAX NETWORK 210 is written into memory B 330B. When the microprocessor 310 examines the memory B and determines a message or request is required of the process control system, the requested data from the process control system 10 upon receipt by the microprocessor 310 is written into memory A. The VAX processor 320 examines memory Aand upon detecting a new message fetches the data and then transfers that data to the requesting VAX thereby permitting the VAX to access the process control system 10.

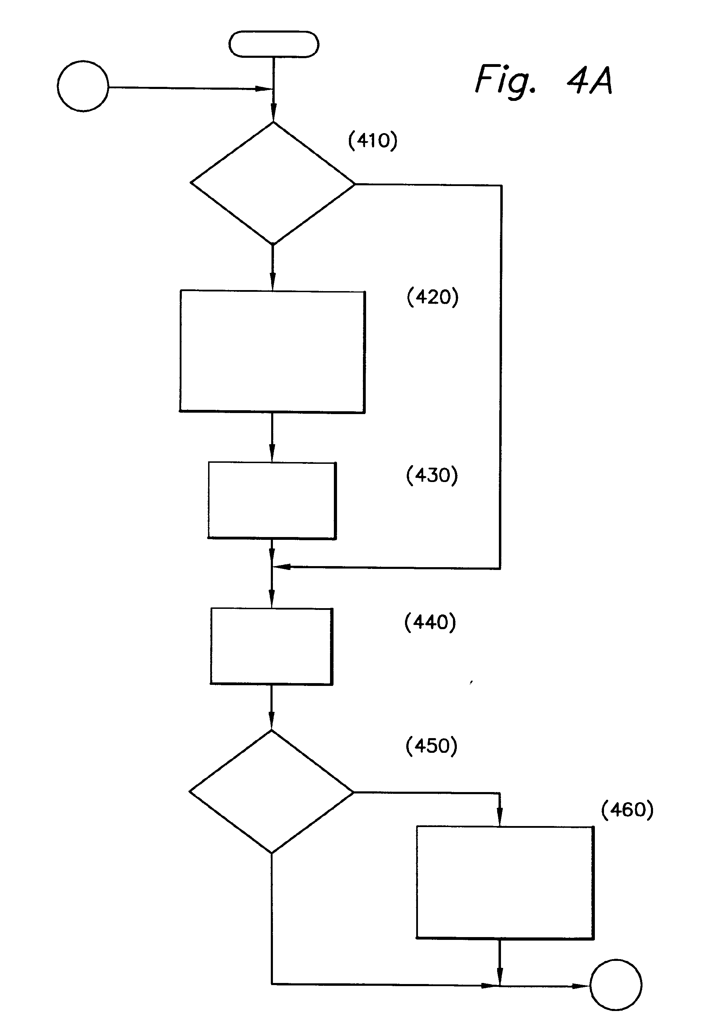

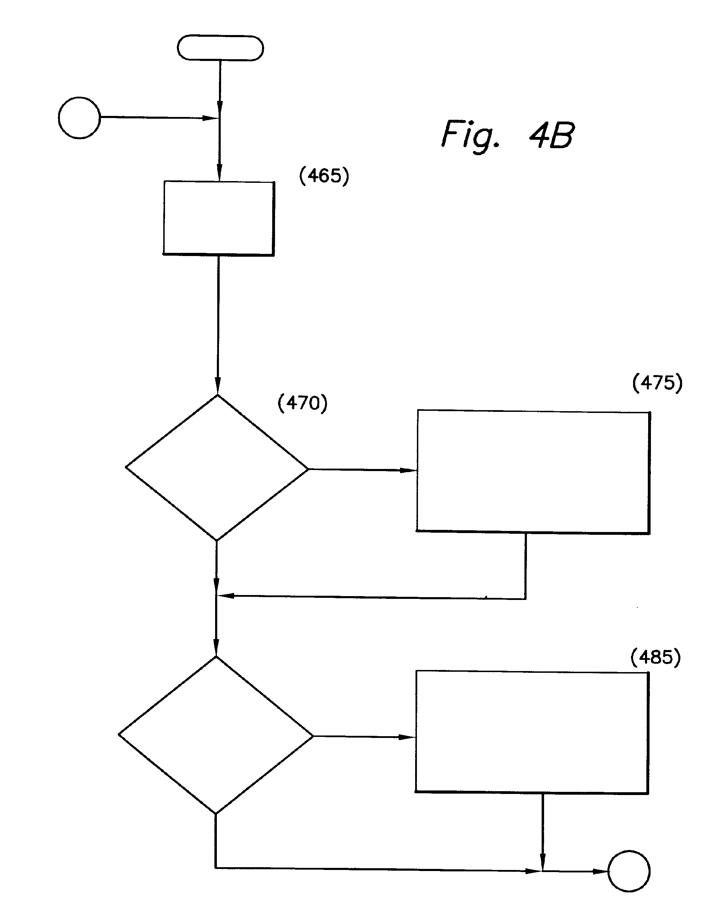

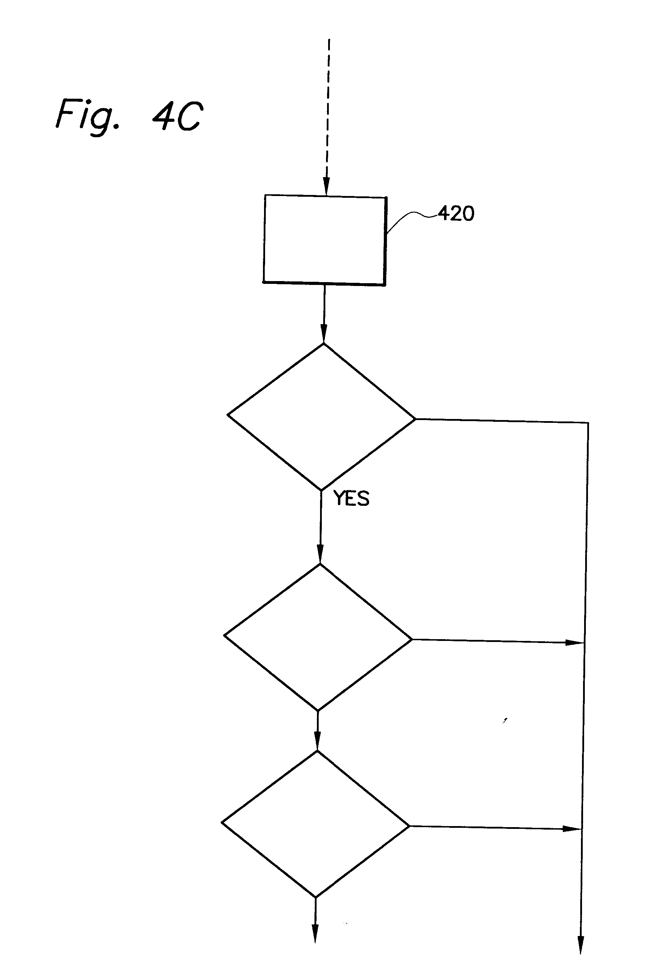

Referring to Figure 4, which comprises Figures 4Aand 4B, there is shown a flow diagram of the communication sequence of the interface apparatus of the preferred embodiment of the present invention. Figure 4A shows a flow diagram of the VAX portion of the interface apparatus and Figure 4B shows a flow diagram of the process control (LCN) portion of the interface apparatus. The VAX processor 320 after having been initialized, determines if there are any incoming messages (block410). If there are any incoming messages, the VAX processor accepts the messages and processes the message identifying the requested data, the requesting VAX 220, and performs various checks of the message to insure the integrity of the system (block 420). The requested data is stored in memory-section B 330B in accordance with a predefined format. This requires a writing operating which is only performed by the VAX processor 320 into this section of the memory (block 430), and the process continues at block 440. If no incoming messages were received at block 410, the process continues at block 440. At block 440, the VAX processor examines the memory section A 330A. This is the section of memory in which the VAX processor 320 reads only i.e., the VAX processor does not write into memory-section A. As a result of examining the memory-section A, the VAX processor 320 determines if any new data was stored in this section of memory, i.e., by the microprocessor 310 (block 450). If no new data detected, the VAX processor 320 continues its processing at block 410. If new data is detected in memory-section A, the VAX processor 320 communicates to the requesting VAX 220 in accordance with the predetermined VAX protocol and includes therein the requested data which was supplied by the microprocessor 310 (block460). The VAX processor makes predetermined checks on the data, including formatting the data into a predefined format,....

The microprocessor 310 on the other hand examines memory-section B 330B to determine if any new data requests was stored therein by the VAX processor 320 (block 465). If any new data was requested by the VAX processor 320 (block 470), the message stored in memory-section B is processed by the microprocessor 310. The processing includes checks on the requested data to insure that no security breaches exists, that the format is correct, and performs any other validity checks required to insure proper communication between the process control systems 10 and the computer systems 200. Once the message is accepted, the microprocessor 310 formats the request consistent with the LCN protocol and communicates on the LCN to the appropriate module to obtain the requested data (block 475). The processing then continues at block 480. If no data was requested by the VAX, i.e., there is no message stored in memory-section B, the processing continues to block480. At block480, the microprocessor examines to see if any LCN requested data was received over the LCN 120. If any LCN requested data was received, the data is then transferred to the memory-section A identifying the message so that the message can be transferred to the proper i.e., requesting, VAX 220 (block 485). If no LCN requested data was received by the microprocessor 310, the processing continues at block 465. After the requested LCN data which was received by the microprocessor 310 has been transferred to the memory-section A 330A, the processing likewise continues at block 465.

In the preferred embodiment of the present invention, part of the processing of block 420 (shown in Figure 4C) includes a data caching function, i.e., searching a dedicated portion of memory to determine if the requested data is already stored in memory, and if so, determining if the requested data is current from the time stamp associated with the data. (Current data will vary from user to user and application to application.) If the data is available and current, the data stored in memory is fetched and transmitted to the requesting VAX in accordance with the established protocol. This check is relatively fast and can eliminate making a request to a relatively slow LCN. If the data is not available or is not current the request is then made to the LCN as described herein. It will be recognized by those skilled in the art that the processing of the message, including the various checks, of block 420 can be varied depending on the system parameters and requirements, such as response time, how current the available data is, ....

Thus it can be seen by one skilled in the art that no changes need to be made to the VAX 220 systems connected to the NETWORK 210 and no changes need to be made to the various modules of the process control system. The modules of the process control system communicate to the interface 300 of the present invention as though it were another module. Similarly, the VAXes communicate to the interface via the NETWORK 210 as though it were another VAX connected to the NETWORK. The messages include information identifying the requested data, the sending VAX,... The processing done within the interface 300, which includes the security checks to insure the integrity of the respective systems are maintained, can also include additional processing to time stamp the data, consolidate requests,.... Although Figure 4 describes requests by the computer system, it will be recognized that, although not described, the reciprocal can be implemented, i.e., requests by the process control system.

While there has been shown what is considered the preferred embodiment of the present invention, it will be manifest that many changes and modifications can be made therein without departing from the essential spirit and scope of the invention. It is intended, therefore, in the annexed claims to cover all such changes and modification which fall within the true scope of the invention.

## Claims

1. An interface apparatus for providing communications between a process control system and a computer system, wherein the process control system includes a plurality of modules, each module operatively connected to a first network, and each module communicates with the other modules in accordance with a first predetermined protocol, and wherein the computer system includes a plurality of computers, each computer operatively connected to a second network, and each computer communicates with the other computers in accordance with a second predetermined protocol, said interface apparatus characterised by:-
a) a first processor, operatively connected to said first network, said first processor being of a type compatible with processors utilized in the modules of said process control system, said first processor interfacing to the first network in the manner of any other module of the process control system such that said first processor communicates with the plurality of modules connected to the first network in accordance with the first predetermined protocol in response to request and reply commands received from the process control system and the computer system;
b) a second processor, operatively connected to said second network; said second processor being of a type compatible with processors utilized in the computers of said computer system, said second processor interfacing to the second network in the manner of any other computer of the computer system such that said second processor communicates with the plurality of computers connected to the second network in accordance with the second predetermined protocol in response to request and reply commands received from the process control system and the computer;
c) memory means for storing information, said memory means being divided in two portions, memory A portion and memory B portion, such that -
i) said first processor stores information, to be transferred from the process control system to the computer system, in the memory A portion;
ii) said first processor fetches information, to be passed on to said process control system from said computer system, from the memory B portion;
iii) said second processor stores information, to be transferred from the computer system to the process control system, in the memory B portion; and
iv) said second processor fetches information, to be passed on to said computer system from said process control system, from memory A portion, thereby effecting communications between the process control system and the computer system.

2. An interface apparatus according to Claim 1, characterised in that said information stored in memory B portion comprises:
a request from the computer system to communicate with the process control system.

3. An interface apparatus according to Claim 1 or 2, characterised in that said information stored in memory A portion comprises:
a response to a request from the computer system.

4. An interface apparatus according to any preceding Claim, characterised in that the information stored in memory A portion comprises a request from the process control system to communicate with the computer system.

5. An interface apparatus according to any preceding Claim, characterised in that the information stored in memory B portion comprises a reply to a request from the process control system.

6. A method for interfacing between a process control system and a computer system, wherein the process control system includes a plurality of modules, each module operatively connected to a first network, and each module communicates with the other modules in accordance with a first predetermined protocol, and wherein the computer system includes a plurality of computers, each computer operatively connected to a second network, and each computer communicates with the other computers in accordance with a second predetermined protocol, and further wherein an interface apparatus is operatively connected between the process control system and the computer system such that a first processor is operatively connected to the first network and communicates with the plurality of modules in accordance with the first predetermined protocol, and a second processor is operatively connected to the second network and communicates with the plurality of computers in accordance with the second predetermined protocol, the method characterised by:-

both of said first and second processors being operatively connected to a memory means having a first portion (memory A portion) and a second portion (memory B portion); and wherein
i) said first processor stores information, to be transferred from the process control system to the computer system, in the memory A portion;
ii) said first processor fetches information, to be passed on to said process control system from said computer system, from the memory B portion;
iii) said second processor stores information, to be transferred from the computer system to the process control system, in the memory B portion; and
iv) said second processor fetches information, to be passed on to said computer system from said process control system, from memory A portion, thereby effecting communications between the process control systems and the computer system.

7. A method according to Claim 6, characterised by:-
i) for the second processor:
a) determining if there are any incoming messages from any of the computers, and if not, proceeding to step (e);
b) accepting the incoming messages;
c) processing the incoming message, to include verifying the validity of the message and formatting the message in a predetermined format;
d) storing the processed message in memory B portion of memory;
e) examining the memory A portion of memory to determine if any new information is stored therein; and if not, proceeding to step (a);
f) transmitting the new information to an identified computer, the identified computer being the computer that made the request; and
g) proceeding to step (a); and
ii) for the first processor:
h) examining the memory B portion of memory to determine if there are any inputs from the computer systems, and if not, proceeding to step (j);
i) communicating to an identified module on the first network via the first predetermined protocol to obtain requested information;
j) determining if any messages have been received from any of the modules, and if not, proceeding to step (1);
k) transferring the received information to the memory A section of memory; and
I) proceeding to step (h).

8. A method according to Claim 6 or 7 characterised in that step (c) further includes the steps of:
m) determining if the incoming message is requesting data, and if not proceeding to step (d);
n) determining if the data being requested is stored in memory, and if not proceeding to step (d) to request data from the process control system;
o) determining if the data being requested is current, and if not proceeding to step (d) to request the data from the process control system; and
p) proceeding to step (f) to transmit the requested data as stored in memory to the requested data as stored in memory to the requesting computer of the computer system
